# EUROPÄISCHE PATENTSCHRIFT

(11) **EP 3 809 004 B1**
(45) Veröffentlichungstag und Bekanntmachung des Hinweises auf die Patenterteilung: **30.03.2022**
(21) Anmeldenummer: 20201485.8
(22) Anmeldetag: 13.10.2020
(51) Int. Cl.: F16C 11/04

(54) **LAGERANORDNUNG ZUM SCHWENKBAREN ANBRINGEN EINER BORDWAND AN EINEM FAHRZEUGKÖRPER EINES KIPPERFAHRZEUGS**
BEARING ASSEMBLY FOR MOUNTING A SIDE BOARD TO A VEHICLE BODY OF A TILTING VEHICLE SO THAT IT CAN BE PIVOTED
DISPOSITIF PALIER PERMETTANT D'APPLIQUER DE MANIÈRE PIVOTANTE UNE PAROI LATÉRALE À UNE CARROSSERIE D'UN VÉHICULE À BENNE BASCULANTE

(30) Priorität: 18.10.2019 DE 102019216101
(43) Veröffentlichungstag der Anmeldung: 21.04.2021
(73) Patentinhaber: Franz Xaver Meiller Fahrzeug- und Maschinenfabrik - GmbH & Co KG, 80997 München (DE)
(72) Erfinder: Kibler, Florian, 81243 München (DE); Drexler, Hubert, 82347 Bernried (DE)
(74) Vertreter: Weickmann & Weickmann PartmbB

(56) Entgegenhaltungen:
- EP-A1- 0 186 553
- US-A1- 2017 067 504

## Beschreibung

Die vorliegende Erfindung betrifft eine Lageranordnung zum schwenkbaren Anbringen einer Bordwand an einem Fahrzeugkörper eines Kipperfahrzeugs sowie ein Kipperfahrzeug, umfassend einen Fahrzeugkörper, wenigstens eine schwenkbare Bordwand und wenigstens eine derartige Lageranordnung zum Anbringen der Bordwand an dem Fahrzeugkörper.

Kipperfahrzeuge, beispielsweise Hinterkipper und Dreiseitenkipper, umfassen in der Regel schwenkbare Bordwände, die mittels geeigneter Lager- oder Scharnieranordnungen an einer Ladefläche und damit einem Fahrzeugkörper des Kipperfahrzeugs angebracht sind. Hierbei ist üblicherweise ein Gelenkband fix an der Bordwand angebracht und mittels einer einfachen Lagerstelle mit Spiel, beispielsweise über einem verstiftelten Kopfbolzen, mit dem Fahrzeugkörper bzw. der Ladefläche zugeordneten Seitenblechen verbunden. Hierbei kann allerdings ein Dickenausgleich für die verwendeten Bodenbleche des Kipperfahrzeugs lediglich aufwendig über maßlich unterschiedliche Lagerplatten erfolgen, während ein Toleranzausgleich überhaupt nicht möglich ist. Folglich können die auftretenden Spaltmaße, die unter anderem angesichts des zu erwartenden Transports von Schüttgut möglichst klein ausfallen sollten, nur durch eine aufwendige Ausrichtung der beteiligten Komponenten bei der Montage der Bordwand angepasst werden. Ferner ist für eine Dämpfung der auftretenden Geräusche eine Vorspannung durch eine zusätzliche Gummirolle notwendig.

In diesem Zusammenhang sei auf die US 2017 / 067 504 A1, welche eine gattungsgemäße Lageranordnung lehrt, sowie die EP 0 186 553 verwiesen.

Es ist somit die Aufgabe der vorliegenden Erfindung, eine verbesserte gattungsgemäße Lageranordnung bereitzustellen, die die oben genannten Nachteile ausräumt und sich durch eine vereinfachte Montage und ein verbessertes Handling auszeichnet.

Zur Lösung dieser Aufgabe umfasst die erfindungsgemäße Lageranordnung ein fest der Bordwand zugeordnetes Gelenkband, welches mit einem hohlzylindrischen Aufnahmeabschnitt mit einem durch eine Innenwand davon begrenzten Innenraum und einem ersten und einem zweiten Ende bereitgestellt ist, ein Paar von dem Fahrzeugkörper des Kipperfahrzeugs zugeordneten Seitenblechen mit jeweils wenigstens einer Durchbrechung, zwischen welchen der zylindrische Aufnahmeabschnitt derart anordenbar ist, dass die Durchbrechungen der Seitenbleche und der Innenraum des Aufnahmeabschnitts miteinander ausgerichtet sind, eine in dem Aufnahmeabschnitt aufgenommene vorgespannte Lagerbuchse, ein in der Lagerbuchse aufgenommenes Hülsenelement und eine Schraube mit einem Schraubenkopf, welche sich durch die Durchbrechungen der Seitenbleche und das Hülsenelement erstreckt und mit Hilfe einer Schraubenmutter den Aufnahmeabschnitt zwischen den Seitenblechen einspannt.

Durch die Verwendung einer vorgespannten Lagerbuchse in dem Aufnahmeabschnitt wird eine spielfreie und geräuscharme Montage der Bordwand an dem Fahrzeugkörper ermöglicht, ohne dass dazu zusätzliche Komponenten wie Gummirollen zur Geräuschdämpfung oder ähnliches notwendig sind. Ferner kann durch diese Maßnahme ein Bodenblechdicken- und Toleranzausgleich ebenfalls ohne zusätzliche Maßnahmen stattfinden. Geeignet vorgespannte Lagerbuchsen sind beispielsweise unter dem Handelsnamen Iglidur^{®} von der Igus GmbH aus Köln erhältlich.

Hierbei kann beispielsweise an Ausführungsformen gedacht werden, in welchen die Lagerbuchse durch zwei Teile gebildet ist, welche sich von beiden Seiten in den Aufnahmeabschnitt hinein erstrecken. Hierdurch wird eine weiter vereinfachte Montage und insbesondere ein vereinfachtes Einsetzen der Lagerbuchse in den Aufnahmeabschnitt erzielt.

Erfindungsgemäß weist die Lagerbuchse an wenigstens einem der Enden des Aufnahmeabschnitts einen sich wenigstens abschnittsweise radial über die Innenwand des Aufnahmeabschnitts hinaus erstreckenden Abschlussabschnitt auf. Hierdurch kann eine korrekte Positionierung der Lagerbuchse innerhalb des Aufnahmeabschnitts sichergestellt werden.

Insbesondere kann sich dieser Abschlussabschnitt oder wenigstens einer der Abschlussabschnitte im Wesentlichen über den gesamten Umfang des Aufnahmeabschnitts erstrecken.

Das Hülsenelement ist durch zwei Teile gebildet, welche sich von beiden Seiten in die Lagerbuchse hinein erstrecken. In dieser zweiteiligen Ausführungsform ist ferner wenigstens eines der beiden Teile des Hülsenelements mit einem außerhalb des Aufnahmeabschnitts angeordneten Kranzabschnitt bereitgestellt, welcher sich im Wesentlichen über den gesamten Umfang des Aufnahmeabschnitts erstreckt.

Erfindungsgemäß sind somit sowohl der Abschlussabschnitt als auch der Kranzabschnitt wie eben besprochen vorgesehen und im montierten Zustand ist zwischen diesen beiden Komponenten ein vorbestimmter Abstand vorgesehen.

Zur korrekten Positionierung der jeweiligen Komponenten sowie zum Schutz vor Abrasion kann weiterhin zwischen dem Schraubenkopf und dem entsprechenden Seitenblech und/oder der Schraubenmutter und dem entsprechenden Seitenblech und/oder dem Aufnahmeabschnitt und wenigstens einem der beiden Seitenbleche eine Unterlegscheibe aus einem geeigneten Material vorgesehen sein. Zur Erhöhung der beim Einspannen des Aufnahmeabschnitts zwischen den beiden Seitenblechen erreichbaren Klemmkraft kann ferner wenigstens eine der Unterlegscheiben eine Riffelung aufweisen.

Wenngleich das Gelenkband fest an die Bordwand geschweißt sein kann, so sind jedoch auch Ausführungsformen denkbar, in welchen das Gelenkband mit der Bordwand verschraubt ist, wobei insbesondere die Bordwand Bohrungen mit Innengewinden zur Aufnahme der entsprechenden Schrauben aufweisen kann. Auf diese Weise wird ein weiterer Freiheitsgrad zur korrekten Ausrichtung der einzelnen Komponenten zueinander sowie ein Mittel zur Reduktion von Spiel und Toleranzen geschaffen und evtl. auch die Montage der Lageranordnung vereinfacht.

Um auch in Fahrzeugbreitenrichtung und ggf. Fahrzeughöhenrichtung eine Einstellung der Position der schwenkbaren Bordwand gegenüber dem Fahrzeugkörper ermöglichen zu können, kann jedes der Seitenbleche wenigstens zwei Durchbrechungen aufweisen, wobei die Durchbrechungen der beiden Seitenbleche jeweils Paare bilden, zwischen welcher der zylindrische Aufnahmeabschnitt anordenbar ist. Hierdurch ergeben sich entsprechend der Anzahl der Paare von Durchbrechungen durch die Seitenbleche mehrere mögliche Montagepositionen für die Bordwand an dem Fahrzeugkörper.

Gemäß einem zweiten Aspekt betrifft die vorliegende Erfindung ein Kipperfahrzeug, umfassend einen Fahrzeugkörper und wenigstens eine schwenkbare Bordwand, wobei die wenigstens eine schwenkbare Bordwand mittels wenigstens einer erfindungsgemäßen Lageranordnung schwenkbar an dem Fahrzeugkörper angebracht ist. Insbesondere kann hierbei die wenigstens eine schwenkbare Bordwand eine Seitenwand des Kipperfahrzeugs sein, und es kann eine Mehrzahl von Lageranordnungen vorgesehen sein, wobei wenigstens die in Längsrichtung des Kipperfahrzeugs vorderste und insbesondere lediglich die in Längsrichtung des Kipperfahrzeugs vorderste der Lageranordnungen wenigstens in der Form der oben vorgestellten Ausführungsform mit einem außerhalb des Aufnahmeabschnitts angeordneten Kranzabschnitt bereitgestellt sein kann, welcher sich im Wesentlichen über den gesamten Umfang des Aufnahmeabschnitts erstreckt.

Weitere Merkmale und Vorteile der vorliegenden Erfindung werden aus der nachfolgenden Beschreibung von Ausführungsformen davon deutlich, wenn diese zusammen mit den beiliegenden Figuren betrachtet wird. Diese zeigen im Einzelnen:
- Figur 1: ein Vergleichsbeispiel einer Lageranordnung in einer Querschnittsansicht;
- Figur 2: eine Ausführungsform einer erfindungsgemäßen Lageranordnung in einer Querschnittsansicht; und
- Figur 3: die Lageranordnung aus Figur 2 in einer schrägen Draufsicht.

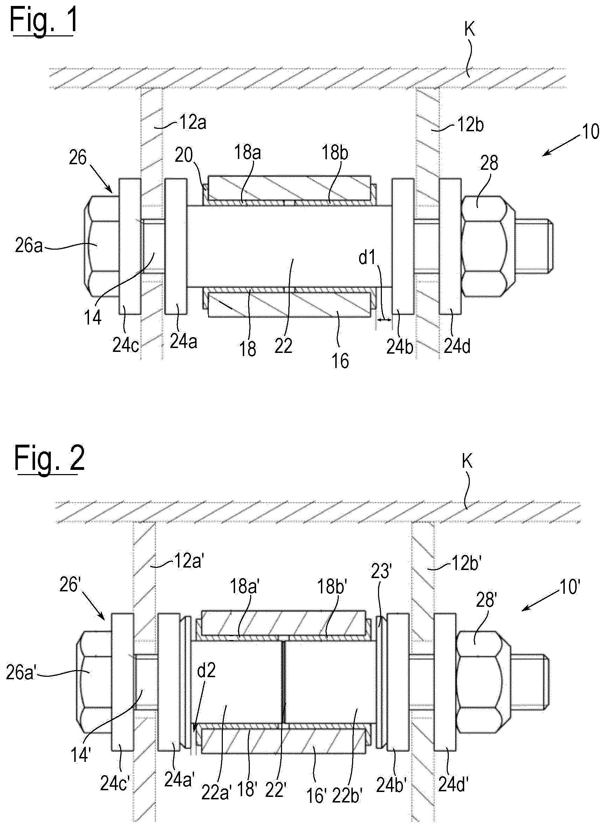

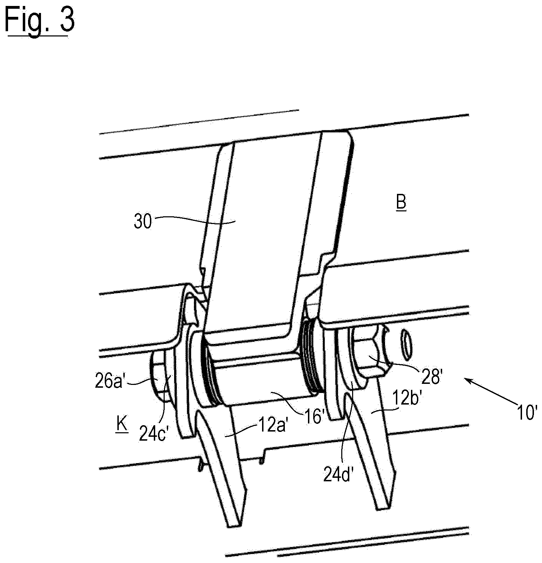

In Figur 1 ist zunächst ein Vergleichsbeispiel einer Lageranordnung zum schwenkbaren Anbringen einer Bordwand an einem Fahrzeugkörper eines Kipperfahrzeugs in einer Querschnittsansicht dargestellt und ganz allgemein mit dem Bezugszeichen 10 bezeichnet. Ferner ist ein entsprechender Abschnitt des Fahrzeugkörpers, der im Wesentlichen horizontal verläuft und somit beispielsweise einer Ladefläche des Kipperaufbaus entsprechen kann, mit K bezeichnet. Von diesem Abschnitt K des Fahrzeugkörpers erstrecken sich zwei Seitenbleche 12a und 12b in einem rechten Winkel, die jeweils eine Durchbrechung 14 aufweisen. Zwischen diesen beiden Seitenblechen 12a und 12b ist ein hohlzylindrischer Aufnahmeabschnitt 16 angeordnet, der mit einem der erst in Figur 3 gezeigten Bordwand zugeordneten Gelenkband verbunden ist und der einen Innenraum aufweist.

In diesem Innenraum des Aufnahmeabschnitts 16 ist zunächst an der Innenwand davon anliegend eine zweiteilige vorgespannte Lagerbuchse 18 aufgenommen, die aus den beiden Teilen 18a und 18b besteht. Die beiden Teile 18a und 18b der Lagerbuchse 18 weisen jeweils an ihren Enden einen sich wenigstens abschnittsweise radial über die Innenwand des Aufnahmeabschnitts 16 hinaus erstreckenden Abschlussabschnitt 20 auf.

Wiederum innerhalb der Lagerbuchse ist ein einteiliges Hülsenelement 22 aufgenommen, das sich im Wesentlichen über den gesamten Abstand zwischen den beiden Seitenblechen 12a und 12b erstreckt, wobei sich lediglich noch zwei Unterlegscheiben 24a und 24b gerade innerhalb der beiden Seitenbleche 12a und 12b befinden. Hierbei ist jeweils ein Abstand d1 zwischen den jeweiligen Abschlussabschnitten 20 der Teile 18a und 18b der Lagerbuchse 18 und den entsprechenden Unterlegscheiben 24a bzw. 24b vorgesehen.

In ähnlicher Weise befinden sich außerhalb der beiden Seitenbleche 12a und 12b weitere Unterlegscheiben 24c und 24d, wobei einerseits die Unterlegscheibe 24c eine Anlage für einen Schraubenkopf 26a einer sich durch das Hülsenelement erstreckenden Schraube 26 mit Außengewinde bildet, welche Schraube 26 an ihrem anderen Ende zum Einspannen des Aufnahmeabschnitts zwischen den beiden Seitenblechen 12a und 12b eine aufgeschraubte und angezogene Schraubenmutter 28 mit dazwischen eingefügter Unterlegscheibe 24d aufweist.

Durch das Vorsehen der vorgespannten Lagerbuchse 18 kann in der oben beschriebenen Art und Weise eine spielfreie und geräuscharme Montage der gezeigten Lageranordnung 10 mit gleichzeitigem Bodenblechdicken- und Toleranzausgleich erzielt werden.

In Figur 2 ist eine Ausführungsform einer erfindungsgemäßen Lageranordnung dargestellt, die mit dem Bezugszeichen 10' bezeichnet ist und sich lediglich hinsichtlich des Hülsenelements 22' von dem Vergleichsbeispiel aus Figur 1 unterscheidet. Auf eine Beschreibung der weiteren Komponenten der Lageranordnung 10' soll daher verzichtet werden und es wird auf die entsprechende Beschreibung der jeweiligen Komponenten aus Figur 1 verwiesen, wobei Komponenten mit gleicher oder ähnlicher Funktion oder Ausprägung jeweils mit gleichen Bezugszeichen ergänzt um einen Apostroph bezeichnet sind.

Das Hülsenelement 22' aus Figur 2 ist im Gegensatz zum Hülsenelement 22 aus Figur 1 zweiteilig aufgebaut und umfasst zwei Teile 22a' und 22b', die jeweils in den Innenraum des Aufnahmeabschnitts 16' hineinragen. Die beiden Teile 22a' und 22b' des Hülsenelements 22' weisen ferner außerhalb des Aufnahmeabschnitts 18' jeweils einen Kranzabschnitt 23' auf, welcher sich über ihren gesamten Umfang erstreckt und einen Abstand d2 von den jeweiligen Abschlussabschnitten 20' der beiden Teile 18a' 18b' der Lagerbuchse 18 aufweist. Somit ergibt sich in der in Figur 2 gezeigten Ausführungsform ein noch einmal deutlich verringertes axiales Spiel gegenüber der Lageranordnung aus Figur 1. Dementsprechend kann die Ausführungsform aus Figur 2 in einem erfindungsgemäßen Kipperfahrzeug bei einer Mehrzahl von einer einzelnen schwenkbaren Bordwand zugeordneten Lageranordnung insbesondere die bezüglich der Längsrichtung des Kipperfahrzeugs vorderste sein, während das Vergleichsbeispiel aus Figur 1 bei sämtlichen weiteren Positionen zum Einsatz kommen kann.

Zur Verdeutlichung des montierten Zustands der Ausführungsform aus Figur 2 sei zuletzt noch auf die Figur 3 verwiesen, die die Lageranordnung 10' in montiertem Zustand an einem erfindungsgemäßen Kipperfahrzeug zeigt, wobei erneut der Fahrzeugkörper des Kipperfahrzeugs mit dem Buchstaben K bezeichnet ist und die schwenkbare Bordwand mit dem Buchstaben B bezeichnet ist. Es versteht sich, dass auch das Vergleichsbeispiel aus Figur 1 in gleicher Weise montiert sein kann.

In Figur 3 ist zu erkennen, dass die Lageranordnung 10' fest mit der Bordwand B verschweißt ein in Figur 2 nicht gezeigtes Gelenkband 30 umfasst, das alternativ mit der Bordwand B auch verschraubt sein könnte und an seinem unteren Ende den oben beschriebenen Aufnahmeabschnitt 16' mit den darin aufgenommenen weiteren Komponenten aufweist. Weiterhin sind in der Draufsicht aus Figur 3 besonders gut die beiden Seitenbleche 12a' und 12b' sowie die Unterlegscheiben 24c' und 24d' zu erkennen, die zwischen den genannten Seitenblechen 12a', 12b' und dem Schraubenkopf 26a' sowie der Schraubenmutter 28' eingefügt sind.

## Patentansprüche

1. Lageranordnung (10') zum schwenkbaren Anbringen einer Bordwand (B) an einem Fahrzeugkörper (K) eines Kipperfahrzeugs, umfassend:
- ein fest der Bordwand (B) zugeordnetes Gelenkband (30), welches mit einem hohlzylindrischen Aufnahmeabschnitt (16; 16') mit einem durch eine Innenwand davon begrenzten Innenraum und einem ersten und einem zweiten Ende bereitgestellt ist;
- ein Paar von dem Fahrzeugkörper des Kipperfahrzeugs zugeordneten Seitenblechen (12a', 12b') mit jeweils wenigstens einer Durchbrechung (14'), zwischen welchen der zylindrische Aufnahmeabschnitt (16') derart anordenbar ist, dass die Durchbrechungen (14') der Seitenbleche (12a', 12b') und der Innenraum des Aufnahmeabschnitts (16') ausgerichtet sind;
- eine in dem Aufnahmeabschnitt (16') aufgenommene vorgespannte Lagerbuchse (18');
- ein in der Lagerbuchse (18') aufgenommenes Hülsenelement (22'); und
- eine Schraube (26') mit einem Schraubenkopf (26a'), welche sich durch die Durchbrechungen (14') der Seitenbleche (12a', 12b') und das Hülsenelement (22') erstreckt und mit Hilfe einer Schraubenmutter (28') den Aufnahmeabschnitt (16') zwischen den Seitenblechen (12a', 12b') einspannt,
wobei die Lagerbuchse (18') an wenigstens einem der Enden des Aufnahmeabschnitts (16') einen sich wenigstens abschnittsweise radial über die Innenwand des Aufnahmeabschnitts (16') hinaus erstreckenden Abschlussabschnitt (20') umfasst, und
das Hülsenelement (22') durch zwei Teile (22a', 22b') gebildet ist, welche sich von beiden Seiten in die Lagerbuchse (18') hinein erstrecken, **dadurch gekennzeichnet, dass** wenigstens eines der beiden Teile (22a', 22b') des Hülsenelements (22') mit einem außerhalb des Aufnahmeabschnitts (16') angeordneten Kranzabschnitt (23') bereitgestellt ist, welcher sich im Wesentlichen über den gesamten Umfang des Aufnahmeabschnitts (16') erstreckt,
wobei zwischen dem Abschlussabschnitt (20') und dem Kranzabschnitt (23') ein Abstand (d2) vorgesehen ist.

2. Lageranordnung (10') nach Anspruch 1, wobei die Lagerbuchse (18') durch zwei Teile (18a', 18b') gebildet ist, welche sich von beiden Seiten in den Aufnahmeabschnitt (16') erstrecken.

3. Lageranordnung (10') nach Anspruch 1 oder 2, wobei sich der Abschlussabschnitt (20') oder wenigstens einer der Abschlussabschnitte (20') sich im Wesentlichen über den gesamten Umfang des Aufnahmeabschnitts (16') erstreckt.

4. Lageranordnung (10') nach einem der vorhergehenden Ansprüche, wobei zwischen dem Schraubenkopf (26a') und dem entsprechenden Seitenblech (12a') und/oder der Schraubenmutter (28') und dem entsprechenden Seitenblech (12b') und/oder dem Aufnahmeabschnitt (16') und wenigstens einem der Seitenbleche (12a', 12b') eine Unterlegscheibe (24a'-24d') vorgesehen ist.

5. Lageranordnung (10; 10') nach Anspruch 4, wobei die Unterlegscheibe (24a'-24d') oder wenigstens eine der Unterlegscheiben (24a'-24d') eine Riffelung aufweisen.

6. Lageranordnung nach einem der vorhergehenden Ansprüche, wobei das Gelenkband mit der Bordwand verschraubt ist, wobei insbesondere die Bordwand Bohrungen mit Innengewinden zur Aufnahme der entsprechenden Schrauben aufweist.

7. Lageranordnung nach einem der vorhergehenden Ansprüche, wobei jedes der Seitenbleche wenigstens zwei Durchbrechungen aufweist, wobei die Durchbrechungen der beiden Seitenbleche jeweils Paare bilden, zwischen welchen der zylindrische Aufnahmeabschnitt anordenbar ist.

8. Kipperfahrzeug, umfassend einen Fahrzeugkörper (K) und wenigstens eine schwenkbare Bordwand (B), wobei die wenigstens eine schwenkbare Bordwand (B) mittels wenigstens einer Lageranordnung (10') nach einem der vorhergehenden Ansprüche schwenkbar an dem Fahrzeugkörper (K) angebracht ist.

9. Kipperfahrzeug nach Anspruch 8, wobei die wenigstens eine schwenkbare Bordwand (B) eine Seitenwand des Kipperfahrzeugs ist und eine Mehrzahl von Lageranordnungen (10') vorgesehen sind.

## Claims

1. Bearing assembly (10') for pivotably attaching a side wall (B) to a vehicle body (K) of a tipper vehicle, comprising:
- a strap hinge (30) which is fixedly associated with the side wall (B) and is provided with a hollow cylindrical receiving portion (16; 16') having an interior space defined by an inner wall thereof and a first and a second end;
- a pair of side plates (12a', 12b') which are associated with the vehicle body of the tipper vehicle and each have at least one opening (14'), between which the cylindrical receiving portion (16') can be arranged in such a way that the openings (14') of the side plates (12a', 12b') and the interior of the receiving portion (16') are aligned;
- a preloaded bearing bush (18') received in the receiving portion (16');
- a sleeve element (22') received in the bearing bush (18'); and
- a screw (26') having a screw head (26a') which extends through the openings (14') in the side plates (12a', 12b') and the sleeve element (22') and clamps the receiving portion (16') between the side plates (12a', 12b') by means of a nut (28'),
the bearing bush (18') comprising an end portion (20') on at least one of the ends of the receiving portion (16'), which end portion extends radially beyond the inner wall of the receiving portion (16') at least in portions, and
the sleeve element (22') being formed by two parts (22a', 22b') which extend into the bearing bush (18') from both sides, **characterised in that** at least one of the two parts (22a', 22b') of the sleeve element (22') is provided with a collar portion (23') which is arranged outside the receiving portion (16') and extends substantially over the entire circumference of the receiving portion (16'),
a distance (d2) being provided between the end portion (20') and the collar portion (23').

2. Bearing assembly (10') according to claim 1, wherein the bearing bush (18') is formed by two parts (18a', 18b') which extend into the receiving portion (16') from both sides.

3. Bearing assembly (10') according to either claim 1 or claim 2, wherein the end portion (20') or at least one of the end portions (20') extends substantially over the entire circumference of the receiving portion (16').

4. Bearing assembly (10') according to any of the preceding claims, wherein a washer (24a'-24d') is provided between the screw head (26a') and the corresponding side plate (12a') and/or the nut (28') and the corresponding side plate (12b') and/or the receiving portion (16') and at least one of the side plates (12a', 12b').

5. Bearing assembly (10; 10') according to claim 4, wherein the washer (24a'-24d') or at least one of the washers (24a'-24d') has corrugations.

6. Bearing assembly according to any of the preceding claims, wherein the strap hinge is screwed to the side wall, wherein the side wall in particular has bores having internal threads for receiving the corresponding screws.

7. Bearing assembly according to any of the preceding claims, wherein each of the side plates has at least two openings, wherein the openings of the two side plates each form pairs, between which the cylindrical receiving portion can be arranged.

8. Tipper vehicle comprising a vehicle body (K) and at least one pivotable side wall (B), wherein the at least one pivotable side wall (B) is pivotably attached to the vehicle body (K) by means of at least one bearing assembly (10') according to any of the preceding claims.

9. Tipper vehicle according to claim 8, wherein the at least one pivotable side wall (B) is a lateral wall of the tipper vehicle and a plurality of bearing assemblies (10') are provided.

## Revendications

1. Ensemble de palier (10') pour le montage pivotant d'une ridelle (B) sur une carrosserie de véhicule (K) d'un véhicule à benne basculante, comprenant :
- une bande articulée (30) associée de manière fixe à la ridelle (B) qui est pourvue d'une partie de réception cylindrique creuse (16 ; 16') ayant un espace intérieur délimité par une paroi intérieure de celle-ci et des première et seconde extrémités ;
- une paire de tôles latérales (12a', 12b') associées à la carrosserie du véhicule à benne basculante, chacune ayant au moins une ouverture (14') entre lesquelles la portion de réception cylindrique (16') peut être placée de telle sorte que les ouvertures (14') des tôles latérales (12a', 12b') et l'intérieur de la portion de réception (16') soient alignés ;
- un coussinet précontraint (18') logé dans la portion de réception (16') ;
- un élément de manchon (22') reçu dans le coussinet (18') ; et
- une vis (26') avec une tête de vis (26a'), qui s'étend à travers les ouvertures (14') des tôles latérales (12a', 12b') et l'élément de manchon (22') et qui serre la portion de réception (16') entre les tôles latérales (12a', 12b') à l'aide d'un écrou de vis (28'),
dans lequel le coussinet (18') comprend, à au moins l'une des extrémités de la portion de réception (16'), une portion de fermeture (20') s'étendant radialement, au moins par portions, au-delà de la paroi intérieure de la portion de réception (16'), et
dans lequel l'élément de manchon (22') est formé par deux parties (22a', 22b') qui s'étendent des deux côtés dans le coussinet (18'), **caractérisé en ce qu'**au moins l'une des deux parties (22a', 22b') de l'élément de manchon (22') est pourvue d'une portion de couronne (23') disposée à l'extérieur de la portion de réception (16'), laquelle s'étend sensiblement sur toute la circonférence de la portion de réception (16'),
dans lequel une distance (d2) est prévue entre la portion de fermeture (20') et la portion de couronne (23').

2. Ensemble de palier (10') selon la revendication 1, dans lequel le coussinet (18') est formé par deux parties (18a', 18b') qui s'étendent dans la portion de réception (16') depuis les deux côtés.

3. Ensemble de palier (10') selon la revendication 1 ou 2, dans lequel la portion de fermeture (20') ou au moins une des portions de fermeture (20') s'étend sensiblement sur toute la périphérie de la portion de réception (16').

4. Ensemble de palier (10') selon l'une quelconque des revendications précédentes, dans lequel une rondelle (24a'-24d') est prévue entre la tête de vis (26a') et la tôle latérale correspondante (12a') et/ou l'écrou (28') et la tôle latérale correspondante (12b') et/ou la portion de réception (16') et au moins une des tôles latérales (12a', 12b').

5. Ensemble de palier (10 ; 10') selon la revendication 4, dans lequel la rondelle (24a'-24d') ou au moins l'une des rondelles (24a'-24d') présente une cannelure.

6. Ensemble de palier selon l'une quelconque des revendications précédentes, dans lequel la bande articulée est vissée à la ridelle, la ridelle comportant notamment des alésages avec des filetages internes pour recevoir les vis correspondantes.

7. Ensemble de palier selon l'une quelconque des revendications précédentes, dans lequel chacun des panneaux latéraux présente au moins deux ajours, les ajours des deux panneaux latéraux formant respectivement des paires entre lesquelles la portion cylindrique de réception peut être disposée.

8. Véhicule à benne basculante comprenant une carrosserie de véhicule (K) et au moins une ridelle pivotante (B), ladite au moins une ridelle pivotante (B) étant montée pivotante sur la carrosserie de véhicule (K) au moyen d'au moins un ensemble de palier (10') selon l'une quelconque des revendications précédentes.

9. Véhicule à benne basculante selon la revendication 8, dans lequel ladite au moins une ridelle pivotante (B) est une paroi latérale du véhicule à benne basculante et une pluralité d'ensembles de paliers (10') sont prévus.
